(19) **Europäisches Patentamt**
**European Patent Office**
**Office européen des brevets**

(11) **EP 4 349 873 A1**

(12) **EUROPEAN PATENT APPLICATION**
published in accordance with Art. 153(4) EPC

(43) Date of publication:
**10.04.2024 Bulletin 2024/15**

(21) Application number: **22815967.9**

(22) Date of filing: **26.05.2022**

(51) International Patent Classification (IPC):
**C08F 2/44** (2006.01)    **C08F 283/01** (2006.01)
**C08F 299/06** (2006.01)    **H01F 1/053** (2006.01)

(52) Cooperative Patent Classification (CPC):
**C08F 2/44; C08F 283/01; C08F 299/06; H01F 1/053**

(86) International application number:
**PCT/JP2022/021541**

(87) International publication number:
**WO 2022/255217 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.06.2021 JP 2021093077**

(71) Applicant: **TOYOBO MC Corporation**
**Osaka 530-0001 (JP)**

(72) Inventor: **FUNAOKA, Daiki**
**Nagoya-shi, Aichi 452-0805 (JP)**

(74) Representative: **Müller-Boré & Partner**
**Patentanwälte PartG mbB**
**Friedenheimer Brücke 21**
**80639 München (DE)**

(54) **THERMOSETTING COMPOSITION INCLUDING MAGNETIC POWDER**

(57)    An object of the present invention is to provide a composition including magnetic powder having excellent fluidity and sufficient curing speed, and the present invention is a thermosetting composition including a crystalline radical polymerizable compound having a melting point in the range of 30 to 150°C and magnetic powder.

**Description**

TECHNICAL FIELD

The present invention relates to thermosetting resin compositions containing magnetic powder.

BACKGROUND ART

A resin composition containing magnetic powder is easier to mold than sintered magnets, and therefore the resin composition is used as a magnetic component in various fields by molding it, for example, in electric vehicles, home appliances such as PCs and vacuum cleaners; medical devices such as MRI; and generators such as wind power generation. As an example of the resin composition containing magnetic powder, Patent Document 1 discloses a resin composition containing an epoxy resin, a curing agent, and hard magnetic particles.

CITATION LIST

PATENT LITERATURE

[PTL 1] JP2020-163833A

SUMMARY OF THE INVENTION

PROBLEMS TO BE SOLVED BY THE INVENTION

Higher moldability is required for resin compositions containing magnetic powder. In recent years, as devices have become smaller and more precise, resin compositions containing magnetic powder are required to have higher moldability. For example, the resin composition containing magnetic powder with poor fluidity can form parts by sealed molding such as compression molding, but the dimensional accuracy is poor and productivity is low. On the other hand, a resin composition in liquid state at room temperature has high fluidity even containing magnetic powder, but has problems that its high viscosity causes stickiness, resulting in poor workability, and air bubbles are likely to remain during casting molding. In addition, a resin composition with a slow curing speed required a long time until the resin composition is completely cured after molding, and such a resin composition required a process such as after-curing in some cases. Therefore, there has been a demand for a resin composition having high fluidity and excellent moldability even containing magnetic powder.

The present invention has been made in view of the above circumstances, and an object of the present invention is to provide a composition containing magnetic a powder having excellent fluidity and sufficient curing speed

SOLUTION TO THE PROBLEMS

The present invention, which can solve the above problems, has the following configurations.

[1] A thermosetting composition comprising a crystalline radical polymerizable compound having a melting point in the range of 30 to 150°C and magnetic powder.
[2] The thermosetting composition according to above [1], wherein a content of the magnetic powder is 80% by mass or more in the thermosetting composition.
[3] The thermosetting composition according to above [1] or [2], wherein the magnetic powder is a rare earth magnetic powder.
[4] The thermosetting composition according to any one of above [1] to [3], wherein a melt viscosity of the thermosetting composition by a flow tester is 0.1 dPa·s or more and 10,000 dPa·s or less at a melting point +20°C of the crystalline radical polymerizable compound with a die hole having its diameter of 0.5 mm and its length of 1 mm, and a pressure of 30 kgf/cm$^2$.
[5] A magnetic component obtained by curing the thermosetting composition according to any one of above [1] to [4].
[6] A magnet for a motor unit obtained by curing the thermosetting composition according to any one of above [1] to [4].
[7] A motor core magnet obtained by curing the thermosetting composition according to any one of above [1] to [4].

EFFECTS OF THE INVENTION

According to the present invention, it is possible to provide a thermosetting composition containing magnetic powder having excellent fluidity and sufficient curing speed. Therefore, the thermosetting composition of the present invention can be applied to molding of various magnetic components, and is suitable for, for example, a magnet for a motor unit and a motor core magnet.

DESCRIPTION OF EMBODIMENTS

A thermosetting resin composition of the present invention includes at least a crystalline radical polymerizable compound having a melting point in the range of 30 to 150° C and magnetic powder.

In the present invention, the crystalline radical polymerizable composition has good fluidity during molding due to phase transition at its melting point, and the curing speed after molding is fast due to its radical polymerizbility, and molding can be performed in a short time. In addition, the crystalline radical polymerizable compound also contributes to maintaining the shape of molded product and increasing strength of the molded product even when the content of the magnetic powder is large.

Crystallinity means that an endothermic peak is observed in a DSC curve obtained by raising the temperature of the composition from - 60°C to 200°C at a temperature rising rate of 10°C / minute by differential scanning calorimetry. The crystallinity can be obtained, for example, by adjusting a combination and a blending ratio of each component of the radical polymerizable compound described later.

Examples of the radical polymerizable compound include compounds having a carbon-carbon double bond (also referred to as an ethylenic double bond) capable of radical polymerization. The radical polymerizable compound is not limited to have one radical polymerizable carbon- carbon double bonds but may have two or more radical polymerizable carbon-carbon double bonds or three or more radical polymerizable compounds.

The crystalline radical polymerizable compound is preferably at least one selected from the group consisting of crystalline epoxy (meth)acrylate, crystalline urethane (meth)acrylate, crystalline polyester (meth)acrylate, crystalline polyether (meth)acrylate, crystalline unsaturated polyester, and crystalline radical polymerizable monomer. And the crystalline radical polymerizable compound is more preferably resin having a (meth) acryloyl group such as at least one selected from the group consisting of crystalline epoxy (meth) acrylate, crystalline urethane (meth) acrylate, crystalline polyester (meth) acrylate, crystalline polyether (meth) acrylate, and crystalline unsaturated polyester. Note that the term "(meth)acrylate" means "acrylate" or "methacrylate".

Examples of the above crystalline epoxy (meth)acrylate include epoxy (meth)acrylates having a double bond contained in acrylate or methacrylate formed at the molecular terminal which can be obtained by adding acrylic acid or methacrylic acid to an epoxy resin having two or more glycidyl ether groups in one molecule.

Specific examples thereof include a (meth)acrylate adduct of a bisphenol A type epoxy resin (this refers to (meth)acrylic acid is added to the bisphenol A type epoxy resin to form a (meth)acrylate), a (meth)acrylate adduct of a hydrogenated bisphenol A type epoxy resin, a (meth)acrylate adduct of a phenol or cresol novolac type epoxy resin, and a (meth)acrylate adduct of a biphenyl type epoxy resin.

These can be used alone or in combination of two or more kinds thereof.

Examples of the above crystalline urethane (meth)acrylate include compounds obtained by reacting a polyisocyanate with a hydroxyl group-containing (meth)acrylate. A polyol may be used in combination with a hydroxyl group-containing (meth)acrylate as an alcohol component.

Examples of the above polyisocyanate include aromatic polyisocyanate compounds and aliphatic polyisocyanate compounds.

Specific examples thereof include tolylene diisocyanate, diphenylmethane diisocyanate, hydrogenated diphenylmethane diisocyanate, 1,6-hexamethylene diisocyanate, isophorone diisocyanate, xylylene diisocyanate, hydrogenated xylylene diisocyanate, trifunctional isocyanate having an isocyanurate ring in which a bifunctional isocyanate compound is trimerized, and isocyanate prepolymer modified with a polyol.

These can be used alone or in combination of two or more kinds thereof.

Examples of the above a hydroxyl group-containing (meth)acrylate include hydroxyethyl(meth)acrylate, 2-hydroxypropyl(meth)acrylate, 2-hydroxybutyl(meth)acrylate, phenoxyhydroxypropyl(meth)acrylate, trimethylolpropane di(meth)acrylate, and dipropylene glycol mono(meth)acrylate.

These can be used alone or in combination of two or more kinds thereof.

Examples of the above polyol include polyalcohols having two or more hydroxyl groups in one molecule, polyester polyols having two or more hydroxyl groups in one molecule, and polyether polyols having two or more hydroxyl groups in one molecule.

These can be used alone or in combination of two or more kinds thereof.

Examples of the above polyalcohols having two or more hydroxyl groups in one molecule include, neopentyl glycol, ethylene glycol, 1,3-propanediol, 1,2-butanediol, 1,3-butanediol, 1,4-butanediol, 1,5-pentanediol, 1,6-hexanediol, 1,7-heptanediol, 1,8-octanediol, 1,9-nonanediol, 1,10-decanediol, propylene glycol, diethylene glycol, dipropylene glycol, trimethylene glycol, hydrogenated bisphenol A, bisphenol A ethylene oxide adducts and bisphenol A propylene oxide adducts.

Examples of the above polyester polyols having two or more hydroxyl groups in one molecule include saturated polyester polyols obtained by dehydration condensation reaction of polyalcohols such as neopentyl glycol, ethylene glycol, propylene glycol, diethylene glycol, dipropylene glycol, trimethylene glycol, hydrogenated bisphenol A, bisphenol A ethylene oxide adducts and bisphenol A propylene oxide adducts, with polybasic acids such as adipic acid, (anhydrous) phthalic acid, isophthalic acid, terephthalic acid and trimellitic acid.

Examples of the polyether polyol having two or more hydroxyl groups in one molecule include polyethylene glycol, polypropylene glycol, and polytetramethylene glycol.

These can be used alone or in combination of two or more kinds thereof.

Examples of the above crystalline urethane (meth)acrylate include 2-hydroxyethyl methacrylate adduct of 1,6-hexamethylene diisocyanate (2-HEMA adduct of 1,6-HDI) and 2-hydroxyethyl acrylate adduct of 1,6-hexamethylene diisocyanate.

These can be used alone or in combination of two or more kinds thereof.

Examples of the above crystalline polyester (meth)acrylate include a polyester (meth)acrylate obtained by esterifying (meth)acrylic acid with a polyester polyol, and a polyester (meth)acrylate having a double bond of (meth)acrylate at the molecular terminal obtained by reacting an acid-terminated polyester with a (meth)acrylate having a glycidyl group.

These can be used alone or in combination of two or more kinds thereof.

Examples of the above crystalline polyether (meth)acrylate include a polyether (meth)acrylate obtained by esterifying (meth)acrylic acid with a polyether polyol, and a polyether (meth)acrylate having a double bond of (meth)acrylate at the molecular terminal obtained by reacting a polyether polyol with a (meth)acrylate having a glycidyl group.

These can be used alone or in combination of two or more kinds thereof. When two or more kinds are used in combination, the following examples can be arbitrarily combined

Examples of the above crystalline unsaturated polyester include those synthesized by dehydration condensation reaction of unsaturated polybasic acids and glycols. As the polybasic acid component, saturated polybasic acid may be used in combination with the unsaturated polybasic acid

Examples of the above unsaturated polybasic acid include maleic acid, maleic anhydride, fumaric acid, citraconic acid, mesaconic acid, itaconic acid, tetrahydrophthalic acid, tetrahydrophthalic anhydride, methyl tetrahydrophthalic anhydride, and glutaconic acid

Examples of the above saturated polybasic acid include phthalic acid, phthalic anhydride, isophthalic acid, terephthalic acid, succinic acid, adipic acid, sebacic acid, azelaic acid, tetrabromic phthalic acid.

Examples of the above glycol include ethylene glycol, 1,3-propanediol, 1,4-butanediol, 1,5-pentanediol, 1,6-hexanediol, 1,8-octanediol, propylene glycol, diethylene glycol, triethylene glycol, dipropylene glycol, neopentyl glycol, 1,3-butanediol, hydrogenated bisphenol A, bisphenol A propylene oxide compound, cyclohexanedimethanol and dibromoneopentyl glycol.

These can be used alone or in combination of two or more kinds thereof.

Examples of the above crystalline unsaturated polyester include phthalic acid unsaturated polyesters (condensate of terephthalic acid, fumaric acid and 1,6-hexanediol).

Examples of the above crystalline radical polymerizable monomer include ethoxylated triacrylate isocyanurate, behenyl acrylate, tetramethylpiperidyl methacrylate, diacetone acrylamide, dimethyl ester itaconate, vinyl stearate, N-vinylcarbazole, N-methylol acrylamide, triallyl carbamate, maleimide, and acenaphthylene.

These can be used alone or in combination of two or more kinds thereof. When two or more kinds are used in combination, the following examples can be arbitrarily combined

The crystalline radical polymerizable compound of the present invention has a melting point in the range of 30 to 150° C.

If the melting point of the crystalline radical polymerizable compound is too low, the viscosity becomes too high to cause stickiness, and burrs. When the melting point is 30°C or higher, the thermosetting composition is solid at a temperature at the time of use, for example, at room temperature, making injection molding possible, and providing good handling properties. When the melting point of the crystalline radical polymerizable compound is 150°C or lower, the crystalline radical polymerizable compound has sufficient fluidity for molding, and no solvent is required When the melting temperature of the crystalline radical polymerizable compound is higher than 150° C., for example in injection molding, the temperature of the cylinder and the temperature of the mold are close to each other, so that stability in the cylinder tends to be poor when the crystalline radical polymerizable compound is plasticized in a cylinder in injection molding.

The melting point of the crystalline radical polymerizable compound is preferably 40°C or higher, more preferably 50°C or higher, and preferably 120°C or lower, more preferably 100°C or lower (that is, preferably 40 to 120°C, more preferably 50 to 100°C).

The crystalline radical polymerizable compound is preferably a solid at 23° C. If the crystalline radical polymerizable compound is solid at room temperature, the shape of the prepared crystalline radical polymerizable compound does not change during transportation and storage of the crystalline radical polymerizable compound, so that continuous production is possible under general manufacturing equipment and conditions. On the other hand, if the crystalline radical polymerizable compound is a liquid at 23° C, workability and handling properties are degraded. In addition, the liquid crystalline radical polymerizable compound may cause molding defects such as bubbles are likely to remain during molding.

As long as the crystalline radical polymerizable compound can retain a solid at 23° C, the crystalline radical polymerizable compound may contain some crystalline radical polymerizable monomers having a melting point of less than 30° C or amorphous radical polymerizable monomers. Examples of such a crystalline radical polymerizable monomers include polyethylene glycol di(meth)acrylate, methoxy polyethylene glycol (meth)acrylate, trimethallyl isocyanurate.

When the crystalline radical polymerizable compound is a resin having a (meth)acryloyl group, the weight average molecular weight thereof is not particularly limited, but when the weight average molecular weight is too small, the crystalline radical polymerizable compound may be difficult to become a solid Therefore, the weight average molecular weight thereof is preferably 500 or more, more preferably 600 or more, and still more preferably 1,000 or more. On the other hand, when the weight average molecular weight is too large, the characteristics may vary, and therefore, the weight average molecular weight is preferably 100,000 or less, more preferably 50,000 or less, and still more preferably 30,000 or less (That is, the weight average molecular weight is 500 to 100,000, more preferably 600 to 50,000, still more preferably 1,000 to 30,000.).

Any two or all of elements selected from the melting points of the crystalline radical polymerizable compound, the crystalline radical polymerizable monomer, or the weight average molecular weight can be combined, and each suitable content can be combined arbitrarily.

Magnetic Powder

The magnetic powder used in the present invention may be any powder that has magnetic properties. The magnetic powder can be either a soft magnetic powder or a hard magnetic powder, and various known magnetic powder. Examples of the magnetic powder include ferrite magnetic powder, alnico (Al-Ni-Co-Fe) magnetic powder, and rare earth magnetic powder.

Among them, rare earth magnetic powder is preferable because it is excellent in magnetic properties. The magnetic powder may be one kind, or two or more kinds in combination. As a combination of two or more kinds, the following examples can be arbitrarily combined

Examples of the ferrite magnetic powder include spinel-type ferrite magnetic powder and magnetoplumbite-byte ferrite magnetic powder, and magnetoplumbite-byte ferrite magnetic powder having magnetism without an external magnetic field is preferable.

The magnetoplumbite-byte ferrite magnetic powder is represented by, for example, the chemical formula: $MO \cdot 6Fe_2O_3$ (where M is an alkaline earth metal). Examples of the magnetic powder include barium ferrite magnetic powder, strontium ferrite magnetic powder, and barium-strontium ferrite magnetic powder.

The rare earth magnetic powder is an intermetallic compound containing a rare earth element and a transition metal, and may further contain boron (B).

Examples of the rare earth element include La, Ce, Pr, Nd, Sm, Eu, Gd, Tb, Dy, Ho, Er, Tm, Lu and Y, and one kind or two or more kinds thereof may be used Examples of the transition metal include Fe, Co and Ni, and one kind or two or more kinds thereof may be used.

Examples of the rare earth magnetic powder include neodymium magnetic powder such as Nd-Fe-B, Nd-Fe-Co-B, (Nd,Pr)-Fe-B, (Nd,Pr)-Fe-Co-B.; Samarium cobalt magnetic powder such as Sm-Co, Sm-Co-Fe and Sm-Co-Mn; Samarium iron-nitrogen magnetic powder such as $Sm_2$-$Fe_{17}$-$N_3$ and Sm-$Fe_9$-$N_{1.5}$ are exemplified, and one kind or two or more kinds thereof may be used

The average particle size of the magnetic powder is not particularly limited, but considering the handling properties, mixability with the resin, and fluidity of the resin composition, the average particle size of the magnetic powder is preferably 1.0 pm or more, more preferably 2.0 pm or more, and preferably 200 pm or less, more preferably 100 pm or less (i.e., preferably 1.0 to 200 pm, more preferably 2.0 to 100 pm). It is also preferable to mix magnetic powder having different particle sizes, and for example, a mixture of magnetic powder having a particle diameter of 1 to 50 pm and magnetic powder having a particle diameter of 50 to 100 pm may be used.

When a plurality of kinds of magnetic powder are used, the size thereof may be appropriately adjusted in advance to the desired size, and the powders may be ground by a pulverizing device such as a jet mill, an atomizer, a ball mill, or a bead mill. The magnetic powder may be classified by sieving or the like as necessary.

The above average particle diameter of the magnetic powder is applied to each magnetic powder exemplified above.

Thermosetting composition

The content of the magnetic powder contained in the thermosetting composition may be appropriately adjusted depending on the application, but a sufficient magnetic flux density may not be obtained when the content of the magnetic powder is reduced. On the other hand, if the content of the magnetic powder is too large, the fluidity and shape retention of the thermosetting composition may be decreased

The content of the magnetic powder is preferably higher in the order of 60% by mass or more, 80% by mass or more, 85% by mass or more, 90% by mass or more, 95% by mass or more based in 100% by mass of the thermosetting composition, and the upper limit thereof is preferably less than 100% by mass, more preferably 99% by mass or less, still more preferably 98% by mass or less (that is, preferably 60 to less than 100 % by mass, preferably 80 to less than 100 % by mass, more preferably 85 to 99% by mass, more preferably 90 to 99 % by mass, and even more preferably 95 to 98% by mass).

The thermosetting composition may be a thermosetting resin composition. Further, the thermosetting composition includes a crystalline radical polymerizable compound having the predetermined melting point in addition to the magnetic powder, and other additives or the like added if necessary, but may further contain other polymerizable compounds.

The content of the crystalline radical polymerizable compound in 100% by mass of a portion of the thermosetting composition other than the magnetic powder (hereinafter referred to as a non-magnetic powder portion) is preferably higher in the order of 30% by mass or more, 40% by mass or more, 50% by mass or more, 60% by mass or more, 70% by mass or more, 80% by mass or more, 90% by mass or more in this order, and may be 100% by mass. When the content of the crystalline radical polymerizable compound of the present invention is small, it may become difficult to obtain a predetermined effect such as sufficient fluidity and curing speed

The thermoset composition may contain a non-crystalline radical polymerizable compound. The term "non-crystalline" means that no endothermic peak is observed in a DSC curve obtained by raising the temperature of the composition from -60° C. to 200° C. at a temperature rising rate of 10° C/minute by differential scanning calorimetry.

Examples of the non-crystalline radical polymerizable compound include those obtained by preparing combinations or formulation ratios of the components of the above-mentioned radical polymerizable compounds.

The content of the non-crystalline radical polymerizable compound is not particularly limited However, considering the fluidity during molding and the strength of the molded product, the content of the non-crystalline radical polymerizable compound is preferably 45 parts by mass or less, more preferably 25 parts by mass or less, still more preferably 15 parts by mass or less, still more preferably 5 parts by mass or less with respect to 100 parts by mass of the crystalline radical polymerizable compound. The crystalline radical polymerizable ompound may not contain the non-crystalline radical polymerizable compound (0 parts by mass).

The thermosetting composition of the present invention may contain a thermosetting resin (referred to as another thermosetting resin) other than the above. Examples of other thermosetting resins include epoxy resins, cyanate ester resins, unsaturated polyester resins, vinyl ester resins, phenol resins, urea-melamine resins, polyimide resins, and bismaleimide resins. These can be used alone or in combination of two or more kinds thereof.

The content of the other thermosetting resin is preferably 10 parts by mass or less, more preferably 5 parts by mass or less, still more preferably 1 part by mass or less with respect to 100 parts by mass of the crystalline radical polymerizable compound, and the other thermosetting resin may not be contained (0 parts by mass).

Any two or all of elements selected from the above-mentioned content of the crystalline radical polymerizable compound, the above-mentioned content of the non-crystalline radical polymerizable compound, or the above-mentioned content of the other thermosetting resin can be combined, and each suitable content can be arbitrarily combined

The melt viscosity of the thermosetting composition of the present invention is not particularly limited, but when the melt viscosity is too high, fluidity during molding may be lowered, and therefore, the melt viscosity is preferably lower in order of 10,000 dPa·s or less, 9,000 dPa·s or less, 8,000 dPa·s or less, 7,000 dPa·s or less, 6,000 dPa·s or less, 5,000 dPa·s or less, 3,000 dPa·s or less, and 2,000 dPa·s or less. On the other hand, when the melt viscosity is too low, the thermosetting composition may flow into a gap (such as a partitioning portion) such in a cavity or a mold to cause a molding defects such as a burrs, and therefore, the melt viscosity is preferably 0.1 dPa s or more, more preferably 1.0 dPa·s or more, and still more preferably 5.0 dPa·s or more (in other words, preferably 10,000 to 0.1 dPa·s, more preferably 9,000 to 0.1 dPa·s, even more preferably 8,000 to 0. 1 dPa·s, even more preferably 7,000 to 1.0 dPa·s, even more preferably 6,000 to 1.0 dPa·s, even more preferably 5,000 to 1.0 dPa·s, even more preferably 3,000 to 5.0 dPa·s, and most preferably 2,000 to 5.0 dPa·s).

The melt viscosity of the thermosetting composition is a value measured by a flow tester under the conditions of a melting point of the thermosetting composition+20° C, a die hole diameter of 0.5 mm, a length of 1 mm, and a pressure of 30 kgf/cm$^2$. When two or more melting points are observed, the highest melting point is defined as the melting point.

The thermosetting composition may contain various additives as necessary. Examples of the additives include a radical polymerization initiator, a coupling agent, a flame retardant, a weathering agent, a light-resistant agent, a coloring agent, a stress relaxation agent, a release agent, and a curing accelerator. These may be used alone or in combination of two or more kinds thereof.

The total content of various additives in 100% by mass of the thermosetting composition is preferably 5% by mass or less, more preferably 2% by mass or less, still more preferably 1% by mass or less, and the lower limit thereof is preferably 0.01% by mass or more, more preferably 0.1% by mass or more (That is, it is preferably 5 to 0.01% by mass, more preferably 2 to 0.1% by mass, still more preferably 1 to 0.1% by mass).

The thermosetting composition preferably contains a radical generator that generates radicals at a temperature or above a curing initiation temperature (°C). Examples of the radical generator include thermal decomposition organic peroxides. The radical generation temperature of the radical generator is preferably 90°C or higher, more preferably 100°C or higher, still more preferably 105°C or higher, preferably 170°C or lower, more preferably 150°C or lower, and still more preferably 130°C or lower (That is, the temperature is preferably 90 to 170°C, more preferably 100 to 150°C, still more preferably 105 to 130°C). The content of the radical generator in 100% by mass of the thermosetting composition is preferably 5% by mass or less, more preferably 2% by mass or less, still more preferably 1% by mass or less, and the lower limit is preferably 0.05% by mass or more (That is, preferably 5 to 0.05% by mass, more preferably 2 to 0.05% by mass, still more preferably 1 to 0.05% by mass.).

The radical generation temperature is a starting temperature of an exothermic peak of a DSC curve obtained by performing DSC measurement of each composition at a temperature rising rate of 10°C/minute from -60°C to 200°C using a differential scanning calorimeter.

Examples of organic peroxides include t-butylperoxy -2 ethylhexyl monocarbonate, 1,1-di (t-hexylperoxy) cyclohexane, 1,1-di (t-butylperoxy) -3, 3,5-trimethylcyclohexane, t-butylperoxy octoate, benzoyl peroxide, methyl ethyl ketone peroxide, acetyl acetone peroxide, t-butylperoxy benzoate, dicumyl peroxide, etc. These may be used alone or in combination of two or more kinds thereof.

The thermosetting composition preferably contains a polymerization inhibitor. Examples of the polymerization inhibitor include quinones such as hydroquinone, monomethyl ether hydroquinone, toluhydroquinone, di-t -4 methylphenol, phenothiazine, t-butylcatechol, parabenzoquinone, and pyrogallol; phenolic compounds such as 2,6 di-t-butyl-p-cresol, 2,2 methylene-bis- (4-methyl -6 t-butylphenol), 1,1,3-tris-(2-methyl-4 hydroxy-5t-butylphenyl) butane; piperidine-1-oxyls such as 4-hydroxy -2, 2,6, 6-tetramethylpiperidine 1-oxyl, 4-oxo -2, 2,6, 6-tetramethylpiperidine -1 oxyl, 4-methoxy -2, 2,6, 6-tetramethylpiperidine -1 oxyl, 4-carboxy-2,2,6,6- tetramethylpiperidine-1-oxyl, 2,2,6,6-tetxamethylpiperidine-1-oxyl. Viscosity thickening during melting can be suppressed by using these. These may be used alone or in combination of two or more kinds thereof

The content of the polymerization inhibitor in 100% by mass of the thermosetting composition is preferably 2% by mass or less, more preferably 1% by mass or less, still more preferably 0.5% by mass or less, and the lower limit thereof is preferably 0.01% by mass or more (That is, preferably 2 to 0.01% by mass, more preferably 1 to 0.01% by mass, still more preferably 0.5 to 0.01% by mass.).

Examples of the coupling agent include a silane coupling agent and a titanate coupling agent.

Examples of the silane coupling agent include epoxy silane-based, aminosilane-based, cathionic silane-based, vinylsilane-based, acrylsilane-based, mercaptosilane-based, and composites thereof. These may be used alone or in combination of two or more kinds thereof

Examples of the flame retardant include organic flame retardants such as halogen-based, phosphorus-based, nitrogen-based, and composite thereof; Inorganic flame retardants such as metal hydroxide-based, antimony-based, red phosphorus-based, silicone-based, and borates. These may be used alone or in combination of two or more kinds thereof.

Examples of the weathering agent include antioxidants such as phenol and ultraviolet absorbents such as benzophenone compounds.

Examples of the light-resistant agent include a benzophenone compound, a salicylate compound, a benzotriazole compound, and a hindered amine compound

Examples of the coloring agent include pigments and dyes.

Examples of the pigment include kaolin, synthetic iron red oxide, cadmium yellow, nickel titanium yellow, strontium yellow, hydrous chromium oxide, chromium oxide, cobalt aluminate, synthetic ultramarine blue, and the like.

Examples of the dye include isoindolinone, isoindolin, quinophthalone, xanthene, diketopilopyrrole, perylene, perinone, anthraquinone, indigoid, oxazine, quinacridone, benzimidazolone, biolanthrone, phthalocyanine, and azomethine. These may be used alone or in combination of two or more kinds thereof.

Examples of the stress relaxation agent include silicone oil, silicone rubber, acrylic rubber, urethane rubber, acrylonitrile-butadiene rubber, thermoplastic elastomer.

Examples of the release agent include fatty acid waxes, fatty acid metal salt waxes, mineral waxes.

Examples of the curing accelerator include a modified imidazole curing accelerator, a modified aliphatic polyamine accelerator, and a modified polyamine accelerator.

The thermosetting composition of the present invention is obtained by mixing a crystalline radical polymerizable compound having the predetermined melting point and magnetic powder. When mixing, other components such as additives may be added Further, after these components are mixed in a predetermined formulation using a mixer, a blender, or the like, the mixture may be adjusted by a kneader, an extruder, or the like which can be heated and pressurized to granulate the resin composition into an arbitrary shape such as a granular shape or a pellet shape.

Molded products

Molded products of various arbitrary shapes can be produced by using the thermosetting composition of the present invention. The thermosetting composition can be molded by various well-known thermoset resin molding methods such as injection molding, extrusion molding, compression molding, casting molding, and transfer molding. In particular, since the thermosetting composition of the present invention is excellent in fluidity, molded products of various shapes can be produced by injection molding.

As an example of injection molding, a thermosetting composition obtained by mixing magnetic powder, a crystalline radical polymerizable compound, and various additives in a mixer is pelletized, for example, so as to facilitate injection molding, and thus obtained pellet is filled in an injection molding machine, and a resin composition heated to a temperature lower than a curing start temperature is injected into a mold or the like and cured to obtain a molded product. The molded product may be magnetized by applying an external magnetic field if necessary.

Further, as an example of compression molding, after filling a compression molding machine with a thermosetting composition obtained by mixing magnetic powder, a crystalline radical polymerizable compound, and various additives in a mixer, press molding is performed by heating to a temperature lower than a curing start temperature, and curing is performed to obtain a molded product. The molded product may be magnetized by applying an external magnetic field if necessary.

In particular, since the thermosetting composition of the present invention is excellent in fluidity, injection molding is possible, and the thermosetting composition is suitable for molding small and exquisite magnetic parts.

Examples of the magnetic component obtained by curing the thermosetting composition of the present invention include a magnet for a motor unit.

Examples of the magnet for the motor unit include magnetic components such as a spindle motor for a CD, a DVD, and an HDD, a vibration motor for a mobile phone, an actuator for a digital camera, and a motor for an automotive electric component.

Examples of magnetic components include core magnets such as a motor core, a stator core, and a rotor core, and magnets for a motor stator.

Since the thermosetting composition of the present invention is excellent in fluidity and curing speed, a magnetic resin solid substance having a complicated surface shape, a magnetic resin solid substance having a thin-walled portion, and the like can be easily produced by molding in the following steps.

After the thermosetting composition is heated at a temperature higher than or equal to the melting start temperature and a temperature lower than the curing start temperature of the thermosetting composition, the heated thermosetting composition is injected into a mold heated to a temperature higher than or equal to the curing start temperature and then cured to obtain the magnetic resin solid substance.

The thermosetting composition of the present invention is introduced into a mold and molded into a desired shape. Said introduced into a mold means the inside of the mold having a certain shape, and examples thereof include the inside of a container for molding, the inside of the mold, a gap existing in the electronic component, and the inside of a concave portion existing in the surface of the electronic component. The material of the mold is not particularly limited, and examples thereof include metals and resins, and those having heat resistance are preferable.

The method of introducing the thermosetting composition into the mold is not particularly limited, and examples thereof include a method of injecting the thermosetting composition into the mold, a method of dropping the thermosetting composition into the mold, and a method of pushing the thermosetting composition into the mold. Specific examples of the method include an injection molding method, a transfer molding method, an insert molding method, a compression molding method, and a hot melt molding method. The pressure for introducing the thermosetting composition into the mold may be appropriately adjusted, for example, in the range of 0.1 MPa to 10 MPa.

The magnetic resin solid substance (molded product) is obtained by introducing a thermosetting composition into a mold to give a certain shape. The magnetic resin solid substance is not limited to one having a certain shape in a state of being released from the mold, and may have a certain shape in the mold. Further, by using a magnetic resin solid substance, for example, adhesion, fixing, sealing, or the like can be performed For example, the magnetic resin solid substance may be bonded to a mold or may be bonded to a member other than the mold (hereinafter sometimes referred to as another member). The magnetic resin solid substance may be bonded or fused to a mold and another member to bond or fix them. The magnetic resin solid substance may seal the mold, may seal other members, or may seal the mold and other members. Examples of other members include an electronic component, a plate-shaped body made of resin, a plate-shaped body made of metal, a rod-shaped body made of resin, and a rod-shaped body made of metal. The shape of the magnetic resin solid substance is not particularly limited, and examples thereof include a sheet shape, a polygonal prism shape, a cylindrical shape, a rectangular parallelepiped shape, an oval shape, a cone shape, a pyramid shape, and a spherical shape.

Hereinafter, a method of manufacturing a rotor core magnet by filling a magnet cavity provided in a rotor core with the thermosetting composition of the present invention by injection molding is explained as an example. The configuration of the rotor core is not particularly limited, and may be, for example, a laminate of electromagnetic steel sheets. In the outer rotor type motor, the rotor core is provided with a cavity on the inner peripheral side of the rotor, and a magnetic resin solid substance is formed in the cavity by injection filling the cavity with the thermosetting composition of the present invention. Further, in the inner rotor type motor, the rotor core is provided with a cavity on the outer peripheral side of the rotor, and a magnetic resin solid substance is formed in the cavity by injection-filling the thermosetting composition of the present invention in the cavity. Although the position of the magnet cavity varies depending on the configuration of the rotor, the present invention is not particularly limited the position. The cavity for forming the magnet may be divided for each magnetic pole or may be continuous in a ring shape.

In the present invention, the injection filling method is not particularly limited, but since the thermosetting composition of the present invention has appropriate fluidity and curing speed, heating is performed in the above-described manufacturing method, specifically, in a cylinder in an injection molding machine filled with the thermosetting composition. The heated thermosetting composition is filled in an injection filling region (cavity) defined by an electromagnetic steel sheet or the like constituting the rotor core and cooled According to this method, the thermosetting composition can be filled along the shape of the magnet cavity provided in the rotor core, and the rotor core in which the magnetic resin solid substance is formed in the cavity can be obtained

The present application claims the benefit of priority based on Japanese Patent Application No. 2021-093077 filed on June 2, 2021. The entire contents of the specification of Japanese Patent Application No. 2021-093077 filed on June 2, 2021 are incorporated herein by reference.

EXAMPLES

Next, the present invention will be specifically described using examples and comparative examples. However, the present invention is by no means limited to aspects of such examples, and modifications may be made as appropriate without departing from the gist of the present invention.

Polymerizable Resin Composition

The polymerizable compound shown in Table 1 and the other raw materials were blended in the blending amounts (parts by weight) shown in Table 2, and the polymerizable resin composition uniformly prepared by a kneading machine capable of being heated and cooled under pressure was charged into an extruder and hot-cut to obtain a granular resin composition. As the radical polymerization initiator (dicumyl peroxide), PERCUMYL D manufactured by NOF Corporation was used

The obtained granular resin composition was subjected to thermal curing injection molding to prepare a test piece. Various physical properties of the molded test pieces were evaluated

(1) Magnetic Properties

The test piece was checked whether the test piece placed on the iron plate was adhered by magnetic force. And the magnetic properties of the test piece of $10 \times 10 \times 50$ mm were examined by bringing the $10 \times 10$ mm face of the test piece into contact with a iron plate and measuring the strength of the test piece when pulled in the plane direction with a load cell.

    Good: Test piece was adhered to the iron plate at a strength of 0.01 MPa or more.
    Fair: Test pieces was adhered to the iron plate at a strength of less than 0.01 MPa.
    Poor : Test piece was not adhered to the iron plate.

(2) Melting Point

Melting point of the polymerizable compound shown in Table 1 was measured by using a differential scanning calorimeter "DSC6220" (manufactured by Seiko Instruments). A sample of 10 mg was placed in an aluminum pan, and the lid was pressed and sealed, and then the measuring the melting point at a temperature rising rate of 10° C/min from -60°C to 200°C. The endothermic peak of the obtained curve was taken as the melting point. The compound with a liquid state at a temperature of 23°C did not measure its melting point.

(3) Moldability

The melt viscosity of the polymerizable composition was measured by using a flow tester (CFT- 100EX manufactured by Shimadzu Corporation). The polymerizable composition was placed in a cylinder sample insertion hole provided with a die having a diameter of 0.5 mm and a length of 1 mm having heated to a melting point of the polymerizable composition of +20°C, the piston was pressurized at a pressure of 30 kgf/cm$^2$ after preheating for 240 seconds, and the polymerizable composition was caused to flow out from a nozzle of the die, and the melt viscosity was determined from a portion having good linearity.
The melt viscosity of 0.1 to 10,000 dPa s at a temperature of the melting point of the polymerizable composition+20°C was evaluated as excellent moldability ("Good "), and otherwise, it was evaluated as inferior moldability ("Poor").

(4) Curing Speed

A hole having a length of 10 mm, a width of 10 mm, and a depth of 1 mm was formed in the center of a Teflon (registered trademark) sheet having a thickness of 2 mm, 50 mm×50 mm. Then, the Teflon (registered trademark) sheet was set in a heat press previously heated to 165°C, and the Teflon (registered trademark) sheet was heated to 165°C. Next, 3 g of the polymerizable composition was placed in the hole of the Teflon (registered trademark) sheet, and the resultant was heated by a heat press under a pressure of 5 MPa for 90 seconds to prepare a 10 mm×10 mm×1 mm sample. For each of these samples, DSC measurement was performed from -60°C to 200°C at a temperature rising rate of 10° C./minute to confirm the presence or absence of an exothermic peak. The sample without exothermic peak observed in DSC measurement was judged to be 90 seconds or less of the curing time, and evaluated as excellent curing speed ("Good"), and otherwise, it was evaluated as inferior curing speed ("Poor").

(5) Necessity of After Cure

In the gel fraction measurement of the curing rate, a gel fraction of 80% or more was evaluated as unnecessary of after curing, and a gel fraction of less than 80% was evaluated as necessary of after curing.
The gel fraction was determined from the mass of the solid content obtained by preparing a sample of 10 mm×10 mm×1 mm in the same manner as in the curing speed described above, immersing the sample in 100 mL of chloroform at 25°C for 120 minutes, and then filtration.

$$\text{Gel fraction (\%)} = (\text{solid mass after immersion-filler mass})/(\text{mass before immersion-filler mass}) \times 100$$

The mass of the filler was defined as the mass of the solid content obtained by dissolving the composition before curing having the same mass as that of the sample in chloroform and filtering the insoluble matter.

[Table 1]

| No. | Polymerizable Compound | Compound Name | Melting Point (°C) | Weight Average Molecular Weight |
|---|---|---|---|---|
| 1 | Crystalline Radical Polymerizable Compound 1 | Urethane acrylate | 75 | 800 |
| 2 | Crystalline Radical Polymerizable Compound 2 | Unsaturated polyester | 100 | 3000 |
| 3 | Thermosetting Resin 1 | Epoxy resin | None | 5000 |
| 4 | Thermosetting Resin 2 | Phenol resin | None | 8000 |
| 5 | Thermoplastic Resin 1 | 66 Nylon | 260 | 50000 |
| 6 | Thermoplastic Resin 2 | Polybutylene terephthalate | 240 | 50000 |

(continued)

| No. | Polymerizable Compound | Compound Name | Melting Point (°C) | Weight Average Molecular Weight |
|---|---|---|---|---|
| 7 | Thermoplastic Resin 3 | Polyester elastomer | 200 | 60000 |

※Urethane acrylate : 2-Hydroxyethyl methacrylate adduct of 1,6-hexane methylene diisocyanate
※Epoxy resin : Bisphenol A type epoxy methacrylate

[Table 2]

| Example, Comparative Example | | Example 1 | Example 2 | Example 3 | Example 4 | Example 5 | Example 6 | Comp. Example 1 | Comp. Example 2 | Comp. Example 3 | Comp. Example 4 | Comp. Example 5 | Comp. Example 6 |
|---|---|---|---|---|---|---|---|---|---|---|---|---|---|
| Crystalline Radical | Urethane acrylate | 20 | 10 | 10 | 40 | | | 15 | | | | | |
| Crystalline Radical | Unsaturated polyester | | | | | 20 | 15 | | | | | | |
| Thermosetting Resin 1 | Epoxy resin | | | | | | | | 10 | | | | |
| Thermosetting Resin 2 | Phenol resin | | | | | | | | | 10 | | | |
| Thermoplastic Resin 1 | 66 Nylon | | | | | | | | | | 15 | | |
| Thermoplastic Resin 2 | Polybutylene terephthalate | | | | | | | | | | | 15 | |
| Thermoplastic Resin 3 | Polyester elastomer | | | | | | | | | | | | 10 |
| Filler 1 | Magnetic Powder | 80 | 90 | 90 | 60 | 80 | 85 | | 90 | 90 | 85 | 85 | 90 |
| | | | | | | | | | | | | | |
| Filler 2 Silane Coupling Agent | Silica Methacrylic silane | 0.6 | 0.3 | 0.3 | 1.2 | 0.6 | 0.6 | 0.5 | 85 0.3 | 0.3 | 0.5 | 0.5 | 0.3 |
| Radical Polymerization Initiator | Dicumyl peroxide | 0.2 | 0.1 | 0.1 | 0.4 | 0.2 | 0.2 | 0.2 | 0.1 | 0.1 | 0.2 | 0.2 | 0.1 |
| Release Agent | Zinc stearate | 2 | 1 | 1 | 4 | 2 | 1 | 1.5 | 1 | 1 | 1.5 | 1.5 | 1 |
| Polymerization Inhibitor | Parabenzoquinone | 0.02 | 0.01 | 0.01 | 0.04 | 0.02 | 0.02 | 0.02 | 0.01 | 0.01 | 0.02 | 0.02 | 0.01 |
| Coloring Agent | Carbon black | 0.04 | 0.02 | 0.02 | 0.08 | 0.04 | 0.04 | 0.03 | 0.02 | 0.02 | 0.03 | 0.03 | 0.02 |
| SUM | | 102.86 | 101.43 | 101.43 | 105.72 | 102.86 | 101.86 | 102.25 | 101.43 | 101.43 | 102.25 | 102.25 | 101.43 |
| Magnetic Properties | | Good | Good | Good | Fair | Good | Good | Poor | Good | Good | Good | Good | Good |
| Melting Point (°C) | | 60 | 60 | 80 | 60 | 100 | 180 | 60 | - | - | 265 | 220 | 160 |

EP 4 349 873 A1

(continued)

| Example, Comparative Example | Example 1 | Example 2 | Example 3 | Example 4 | Example 5 | Example 6 | Comp. Example 1 | Comp. Example 2 | Comp. Example 3 | Comp. Example 4 | Comp. Example 5 | Comp. Example 6 |
|---|---|---|---|---|---|---|---|---|---|---|---|---|
| state at a temperature of 23°C | Solid | Solid | Solid | Solid | Solid | Solid | Solid | Liquid | Solid | Solid | Solid | Solid |
| Moldability | Good | Good | Good | Good | Good | Good | Good | Good | Poor | Poor | Poor | Poor |
| Melt Viscosity (dPa·s) | 50 | 200 | 1000 | 5 | 4500 | 8500 | 70 | 2500 | 12000 | Unmeasurable | | |
| Curing Speed | Good | Good | Good | Good | Good | Good | Good | Good | Poor | Good | Good | Good |
| Necessity of After Cure | Not Required | Not Required | Not Required | Not Required | Not Required | Not Required | Not Required | Required | Required | Not Required | Not Required | Not Required |

Examples 1 to 6 use thermosetting compositions containing a crystalline radical polymerizable compound having a melting point at 30 to 150°C and magnetic powder. The crystalline radical polymerizable compounds of Examples 1 to 6 were solid at room temperature. Examples 1 to 6 were excellent in both magnetic properties, moldability and curing speed. Particularly, Examples 1 to 3, 5 and 6 in which the magnetic powder content was increased had high magnetic properties.

In Comparative Example 1, silica was used as a filler, and magnetic properties were not exhibited.

In Comparative Example 2, a polymerizable composition which is liquid at room temperature was used, and the curing speed was slow and after curing was required

In Comparative Example 3, a polymerizable composition having a melting point outside 30 to 150°C was used, and moldability and curing speed was inferior.

In Comparative Example 4, a polymerizable composition having a melt viscosity exceeding 3000 dPa was used, and moldability was inferior.

In Comparative Examples 5 and 6, thermoplastic resins were used, and the moldability was inferior.

**Claims**

1. A thermosetting composition comprising a crystalline radical polymerizable compound having a melting point in the range of 30 to 150°C and magnetic powder.

2. The thermosetting composition according to claim 1, wherein a content of the magnetic powder is 80% by mass or more in the thermosetting composition.

3. The thermosetting composition according to claim 1, wherein the magnetic powder is a rare earth magnetic powder.

4. The thermosetting composition according to claim 1, wherein a melt viscosity of the thermosetting composition by a flow tester is 0.1 dPa - s or more and 10,000 dPa - s or less at a melting point +20°C of the crystalline radical polymerizable compound with a die hole having its diameter of 0.5 mm and its length of 1 mm, and a pressure of 30 kgf/cm$^2$.

5. A magnetic component obtained by curing the thermosetting composition according to any one of claims 1 to 4.

6. A magnet for a motor unit obtained by curing the thermosetting composition according to any one of claims 1 to 4.

7. A motor core magnet obtained by curing the thermosetting composition according to any one of claims 1 to 4.

## INTERNATIONAL SEARCH REPORT

| International application No. |
| --- |
| **PCT/JP2022/021541** |

### A. CLASSIFICATION OF SUBJECT MATTER

*C08F 2/44*(2006.01)i; *C08F 283/01*(2006.01)i; *C08F 299/06*(2006.01)i; *H01F 1/053*(2006.01)i
FI:  C08F2/44 A; C08F299/06; C08F283/01; H01F1/053 130

According to International Patent Classification (IPC) or to both national classification and IPC

### B. FIELDS SEARCHED

Minimum documentation searched (classification system followed by classification symbols)

C08F2/00-2/60; 6/00-301/00; H01F1/00-1/117; 1/40-1/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2015-029016 A (MINEBEA CO., LTD.) 12 February 2015 (2015-02-12)<br>claim 1, paragraphs [0002], [0016], [0019], [0034]-[0039], [0043], [0044], example 1 | 1-7 |
| X | JP 61-263741 A (MATSUSHITA ELECTRIC IND. CO., LTD.) 21 November 1986 (1986-11-21)<br>claim 1, page 1, lower left column, lines 14-19, page 2, lower right column, line 15 to page 3, upper left column, line 3, page 3, lower right column, line 9 to page 4, lower left column, line 8, example 1 | 1-7 |
| A | JP 2007-329294 A (SUMITOMO METAL MINING CO., LTD.) 20 December 2007 (2007-12-20)<br>entire text | 1-7 |
| A | JP 2020-013865 A (JAPAN U-PICA CO., LTD.) 23 January 2020 (2020-01-23)<br>entire text | 1-7 |
| A | JP 09-272795 A (SHOWA HIGHPOLYMER CO., LTD.) 21 October 1997 (1997-10-21)<br>entire text | 1-7 |

☑ Further documents are listed in the continuation of Box C.      ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 July 2022** | **02 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/021541** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2012-141523 A (KONICA MINOLTA BUSINESS TECHNOLOGIES INC.) 26 July 2012 (2012-07-26)<br>        entire text | 1-7 |

Form PCT/ISA/210 (second sheet) (January 2015)

**INTERNATIONAL SEARCH REPORT**
Information on patent family members

International application No.

**PCT/JP2022/021541**

| Patent document cited in search report | | | Publication date (day/month/year) | Patent family member(s) | Publication date (day/month/year) |
|---|---|---|---|---|---|
| JP | 2015-029016 | A | 12 February 2015 | (Family: none) | |
| JP | 61-263741 | A | 21 November 1986 | (Family: none) | |
| JP | 2007-329294 | A | 20 December 2007 | (Family: none) | |
| JP | 2020-013865 | A | 23 January 2020 | (Family: none) | |
| JP | 09-272795 | A | 21 October 1997 | (Family: none) | |
| JP | 2012-141523 | A | 26 July 2012 | (Family: none) | |

Form PCT/ISA/210 (patent family annex) (January 2015)

**EP 4 349 873 A1**

**REFERENCES CITED IN THE DESCRIPTION**

**Patent documents cited in the description**

- JP 2020163833 A
- JP 2021093077 A